(19) Europäisches Patentamt
European Patent Office
Office européen des brevets

(11) Veröffentlichungsnummer : **0 313 918 B1**

(12) # EUROPÄISCHE PATENTSCHRIFT

(45) Veröffentlichungstag der Patentschrift :
**11.09.91 Patentblatt 91/37**

(51) Int. Cl.$^5$ : **C09B 29/085,** D06P 1/18

(21) Anmeldenummer : **88116885.0**

(22) Anmeldetag : **12.10.88**

(54) **Azofarbstoffe.**

(30) Priorität : **24.10.87 DE 3736088**

(43) Veröffentlichungstag der Anmeldung :
**03.05.89 Patentblatt 89/18**

(45) Bekanntmachung des Hinweises auf die Patenterteilung :
**11.09.91 Patentblatt 91/37**

(84) Benannte Vertragsstaaten :
**CH DE FR GB LI**

(56) Entgegenhaltungen :
**DE-A- 2 916 137**
**FR-A- 2 300 784**
**FR-A- 2 305 470**
**FR-A- 2 413 442**
**GB-A- 2 034 736**

(73) Patentinhaber : **BAYER AG**
**W-5090 Leverkusen 1 Bayerwerk (DE)**

(72) Erfinder : **Hamprecht, Rainer**
**Im Kerberich 25**
**W-5068 Odenthal-Blecher (DE)**

**EP 0 313 918 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind in Wasser praktisch unlösliche Azofarbstoffe der Formel

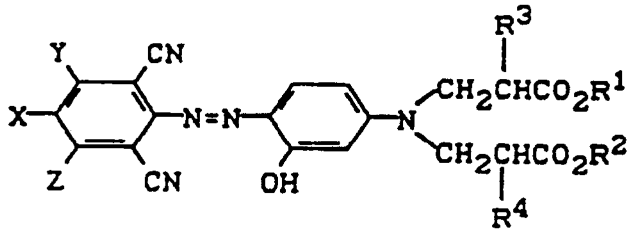

(I)

worin unabhängig voneinander

X = F, Cl, Br, J, R, $CO_2R$, COR', CN oder $CF_3$,
Y = H, $CH_3$, Cl oder Br,
Z = H, Cl oder Br,
R = $C_1$-$C_4$-Alkyl oder $C_5$-$C_6$-Cycloalkyl,
R' = R oder gegebenenfalls durch $C_1$-$C_4$-Alkyl oder Cl substituiertes Phenyl,
$R^1/R^2$ = gegebenenfalls durch OH oder $C_1$-$C_4$-Alkoxy substituiertes $C_1$-$C_4$-Alkyl und
$R^3/R^4$ = H oder $CH_3$ bedeuten.

Bevorzugt sind solche Farbstoffe der Formel I, worin

X = Cl, Br oder $CO_2R$,
Y = H oder Cl,
Z = H oder Cl,
$R^1/R^2$ = $CH_3$ oder $C_2H_5$ und
$R^3/R^4$ = H bedeuten.

Unter diesen sind wiederum solche der angegebenen Formel bevorzugt, worin X = $CO_2R$ und insbesondere Cl sowie vor allem Br bedeuten.
Die Herstellung der Farbstoffe erfolgt nach üblichen Methoden.
Ein Verfahren ist dadurch gekennzeichnet, daß man Aniline der Formel

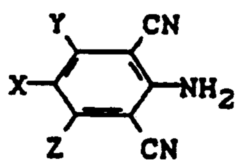

diazotiert und auf Kupplungskomponenten der Formel

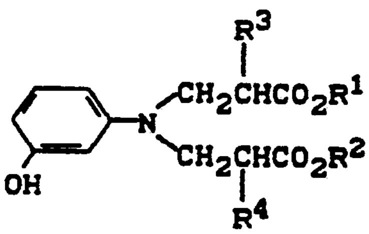

kuppelt.
Die Diazotierung erfolgt in üblicher Weise bei − 20 bis 20°C mit Hilfe von Alkalinitriten, Nitrosylschwefelsäure oder Estern der salpetrigen Säure in Mineralsäuren (HCl, $H_2SO_4$, $H_3SO_3$) oder niederen Fettsäuren (Essig- und/oder Propionsäure). Auch die Kupplung wird nach üblichen Methoden durchgeführt, vorzugsweise durch Zugabe der wäßrigen Lösung oder Dispersion oder wäßrig/alkoholischen Lösung zur Diasoniumsalzlösung und gegebenenfalls Abstumpfen des Reaktionsgemisches auf pH 5-7 durch Zugabe von Alkali.

Die bevorzugte Herstellungsvariante ist dadurch gekennzeichnet, daß man an nach an sich bekannten Verfahren hergestellten Azoverbindungen der Formel

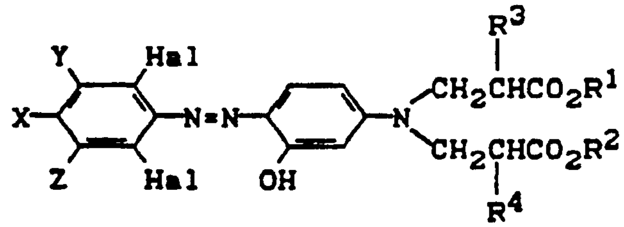

worin Hal = Halogen, vorzugsweise Cl oder Br bedeuten,
die Halogenatome gegen Cyangruppen austauscht.

Diese Austauschreaktion ist ebenfalls an sich bekannt und beispielsweise in folgender Patentliteratur beschrieben :
DE-A 1544563 = GB 1125683
DE-A 2456495 = GB 1479085
DE-A 2759103 = GB 2012799
DE-A 2846439 = GB 2034736
DD 217232 (insbesondere die darin zitierte Literatur)

Danach wird die o,o'-Dihalogenazoverbindung in einem polaren organischen Lösungsmittel oder Wasser mit Metallcyaniden oder cyanidionenspendenden Verbindungen bei Temperaturen von 50-150°C bis zum praktisch vollständigen Austausch der Halogenatome umgesetzt, was sich anhand von Dünnschichtchromatogrammen leicht verfolgen läßt.

Geeignete Cyanide sind vor allem CuCN und $Zn(CN)_2$, sowie komplexe Cyanide der Formel $Me^{\oplus}{}_n(CuCN)_{n+1}$ (Me = Na, K ; n = 1 – 3). Geeignete cyanidionenbildende Systeme sind z.B. Formaldoxim, Cyanhydrine, Nitroalkane oder Formamid.

Bevorzugte organische Lösungsmittel sind polare aprotische Verbindungen wie z.B. DMF, DMSO, Pyridin, N-Methylpyrrolidon, Chlorbenzol, Dichlorbenzole u.a.m.

Besonders geeignet und bevorzugt ist der Halogen/Cyan-Austausch mittels eines Gemisches von Kupfer (I) cyanid und Zinkcyanid.

Während die Diazokomponenten allgemein bekannt sind, sind die Kupplungskomponenten nur zum Teil bekannt, z.B. JA 4725488 (1972).

Man erhält diese Verbindungen jedoch leicht in an sich bekannter Weise, z.B. durch Alkylieren von m-Aminophenol.

Geeignete Kupplungskomponenten sind in den nachfolgenden Beispielen aufgeführt.

Die erfindungsgemäßen Azofarbstoffe eignen sich vorzugsweise zum Färben von synthetischen Textilmaterialien, insbesondere Textilmaterialien aus sekundärem Celluloseacetat und Cellulosetriacetat, Polyamid, wie z.B. Polyhexamethylenadipamid, und ganz besonders aromatischem.

Polyester, wie z.B. Polyethylenterephthalat nach den für diese Faserarten üblichen Färbemethoden unter Verwendung wäßriger oder nicht wäßriger Flotten.

Die Farbstoffe können schließlich auch auf synthetische Textilmaterialien durch Transferdruck aufgebracht werden.

Weiterhin eignen sich die Farbstoffe für den thermischen Transferdruck in optischen Aufzeichnungsverfahren.

Die mit den neuen Farbstoffen erhaltenen scharlachfarbigen bis rubinroten Färbungen auf Polyester zeichnen sich bei guten Allgemeinechtheiten durch hohe Farbstärke, klare Farbtöne und insbesondere hervorragende Thermomigrierechtheit aus.

Gegenüber nächstvergleichbaren bekannten Farbstoffen gemäß DE-A 2759103 zeigen die neuen Farbstoffe Vorteile hinsichtlich Ziehvermögen, Farbstärke und Thermomigrierechtheit.

Aus FR-A 2300784 sind Monoazofarbstoffe bekannt, die alle einen 2,6-Dicyano-3,5-dimethylphenyl-Rest enthalten.

Beispiel 1

Herstellung des Farbstoffs der Formel

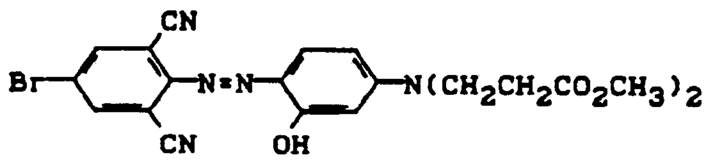

14,3 g 2,4,6-Tribromanilin werden in 15 ml Propionsäure und 30 ml Eisessig gelöst und bei 0°C in 30 Minuten mit 7,5 ml 42%iger Nitrosylschwefelsäure versetzt. Zur Vervollständigung der Diazotierung wird eine weitere Stunde bei 0°C gerührt. Bei 0-5°C fügt man die Diazotierungslösung zu einer Lösung von 13 g 3-Hydroxy-N,N-bis-(methoxycarbonylethyl)-anilin in 100 ml Eisessig und 20 ml 10%iger wäßriger Amidosulfonsäurelösung. Man füllt mit Eiswasser auf ein Volumen von 800 ml auf und rührt weitere 12 Stunden bei 5°C. Man saugt ab und wäscht mit Wasser säurefrei.

Ausbeute : 25,7 g oranges Pulver.

20,5 g des erhaltenen Tribromfarbstoffes werden in 30 ml Dimethylformamid mit 0,54 g Kupfer (I) cyanid und 3,2 g Zinkcyanid versetzt und eine Stunde bei 100°C gerührt. Nach Abkühlen auf 60°C wird mit 50 ml Methanol versetzt, auf Raumtemperatur abgekühlt, abgesaugt und mit verdünnter Salzsäure und Wasser gewaschen, Man erhält 11,1 g des Dicyanazofarbstoffs obiger Formel, der Polyester in einem klaren gelbstichigen Rot mit hervorragender Thermomigrierechtheit färbt.

Bei analoger oder ähnlicher Arbeitsweise können die in der nachfolgenden Tabelle aufgeführten Farbstoffe in guter Ausbeute erhalten werden.

| Bsp.-Nr. | Formel | Nuance auf Polyester |
|---|---|---|
| 2 | 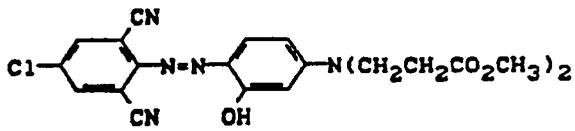 | gelbst.rot |
| 3 | 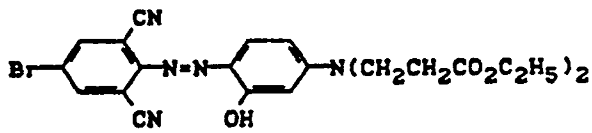 | " " |
| 4 | 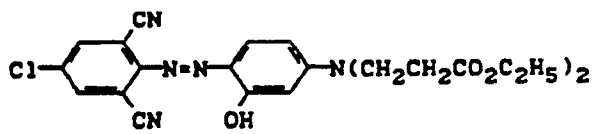 | " " |
| 5 | 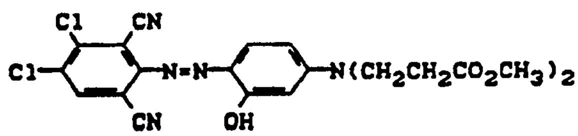 | " " |
| 6 | 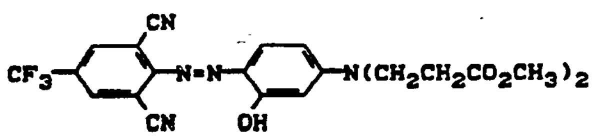 | rot |
| 7 | 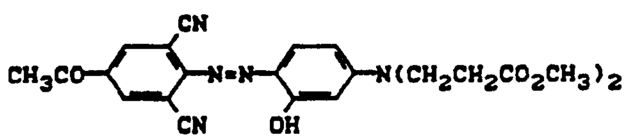 | rot |
| 8 | 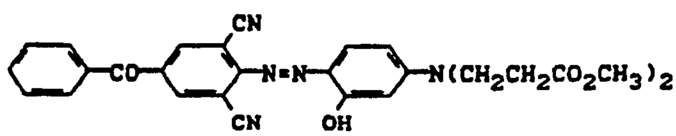 | rot |
| 9 | 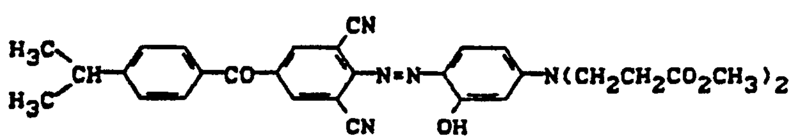 | rot |
| 10 | 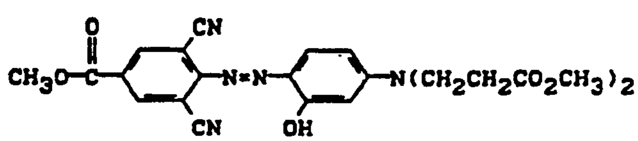 | blaust. rot |
| 11 | 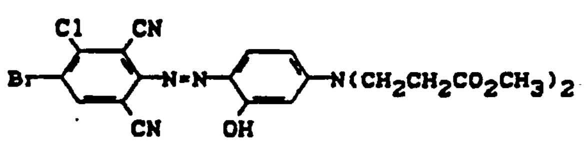 | gelbst. rot |
| 12 | 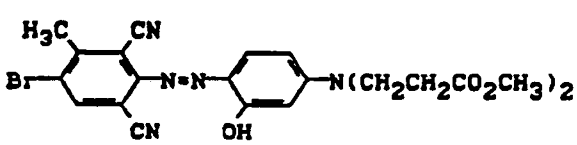 | gelbst. rot |

Beispiel 13

Darstellung des Farbstoffs der Formel

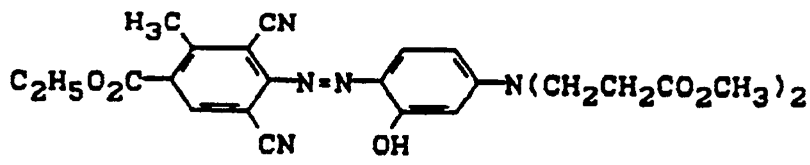

6,64 g 2-Methyl-3,5-dicyan-4-aminobenzoesäure-ethylester (Darstellung nach EP 95638) werden in 20 ml Propionsäure und 40 ml Eisessig gelöst und bei 0°C innerhalb von 30 Minuten mit 5 ml 42%ig Nitrosylschwefelsäure unter Rühren versetzt. Man läßt 90 Minuten bei 0°C nachrühren und versetzt dann die Diazotierungslösung mit einer Lösung von 8,6 g 3-Hydroxy-N,N-bis-(methoxy-carbonylethyl)-anilin in 50 ml Methanol. Mit Eiswasser wird das Volumen auf 600 ml aufgefüllt. Man läßt 15 Stunden nachrühren, saugt ab und wäscht mit Wasser neutral. Der erhaltene Farbstoff färbt Polyester in einem blaustichigen Rot mit guten Echtheiten.

**Patentansprüche**

1. Azofarbstoffe der Formel

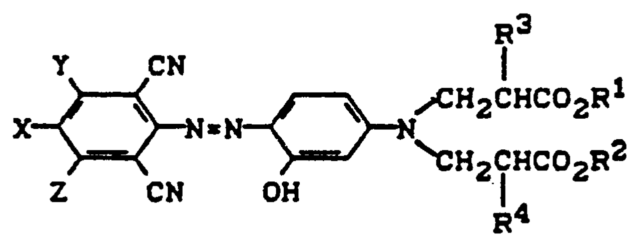

(I)

worin unabhängig voneinander

X = F, Cl, Br, J, R, $CO_2R$, COR', CN oder $CF_3$,
Y = H, $CH_3$, Cl oder Br,
Z = H, Cl oder Br,
R = $C_1$-$C_4$-Alkyl oder $C_5$-$C_8$-Cycloalkyl,
R' = R oder gegebenenfalls durch $C_1$-$C_4$-Alkyl oder Cl substituiertes Phenyl,
$R^1/R^2$ = gegebenenfalls durch OH oder $C_1$-$C_4$-Alkoxy substituiertes $C_1$-$C_4$-Alkyl und
$R^3/R^4$ = H oder $CH_3$ bedeuten.

2. Azofarbstoffe gemäß Anspruch 1, dadurch gekennzeichnet, daß

X = Cl, Br oder $CO_2R$,
Y = H oder Cl,
Z = H oder Cl,
$R^1/R^2$ = $CH_3$ oder $C_2H_5$ und
$R^3/R^4$ = H bedeuten.

3. Azofarbstoffe gemäß Anspruch 1 oder 2, dadurch gekennzeichnet, daß X = $CO_2R$, Cl oder Br bedeuten.

4. Azofarbstoffe gemäß Anspruch 1 der Formel

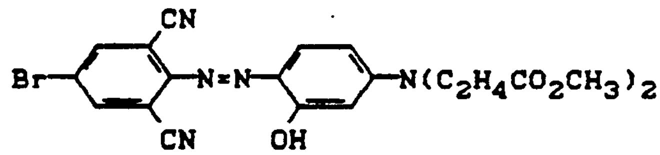

5. Verfahren zur Herstellung von Azofarbstoffen gemäß Anspruch 1, dadurch gekennzeichnet, daß man Aniline der Formel

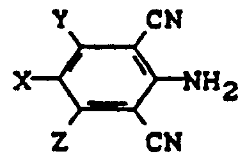

diazotiert und auf Kupplungskomponenten der Formel

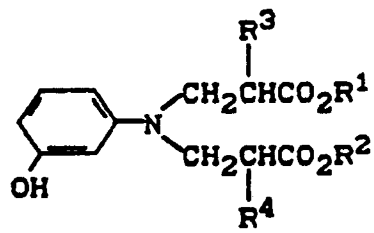

kuppelt.

6. Verfahren zur Herstellung von Azofarbstoffen gemäß Anspruch 1, dadurch gekennzeichnet, daß man an Azoverbindungen der Formel

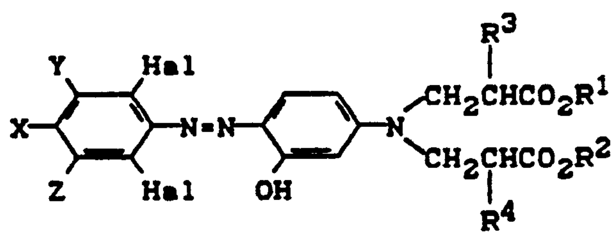

worin
Hal = Halogen, vorzugsweise Cl oder Br bedeuten,
die Halogenatome in an sich bekannter Weise gegen Cyangruppen austauscht.

7. Verfahren zum Färben von synthetischem Textilmaterial, dadurch gekennzeichnet, daß man Farbstoffe gemäß Anspruch 1 verwendet,

8. Verfahren zur Durchführung des textilen oder nichttextilen Transferdrucks, dadurch gekennzeichnet, daß man Farbstoffe gemäß Anspruch 1 verwendet.

## Claims

1. Azo dyestuffs of the formula

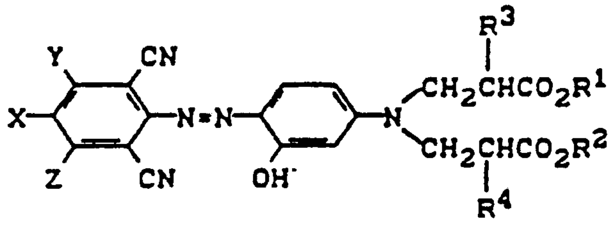

(I)

in which, independently of one another,

X denotes F, Cl, Br, I, R, $CO_2R$, COR′, CN or $CF_3$,
Y denotes H, $CH_3$, Cl or Br,
Z denotes H, Cl or Br,
R denotes $C_1$-$C_4$-alkyl or $C_5$-$C_6$-cycloalkyl,
R′ denotes R or phenyl which is unsubstituted or substituted by $C_1$-$C_4$-alkyl or Cl,
$R^1/R^2$ denotes $C_1$-$C_4$-alkyl which is unsubstituted or substituted by OH or $C_1$-$C_4$-alkoxy and
$R^3/R^4$ denotes H or $CH_3$.

2. Azo dyestuffs according to Claim 1, characterised in that
X denotes Cl, Br or $CO_2R$,
Y denotes H or Cl,
Z denotes H or Cl,
$R^1/R^2$ denotes $CH_3$ or $C_2H_5$ and
$R^3/R^4$ denotes H.

3. Azo dyestuffs according to Claim 1 or 2, characterised in that X denotes $CO_2R$, Cl or Br.

4. Azo dyestuffs according to Claim 1 of the formula

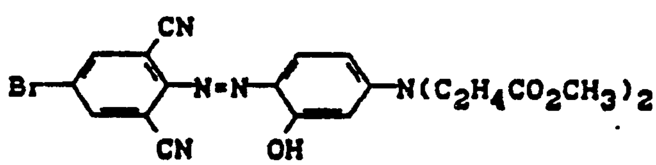

5. Process for the preparation of azo dyestuffs according to Claim 1, characterised in that anilines of the formula

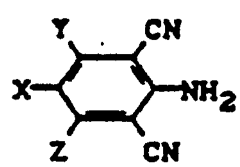

are diazotised and coupled onto coupling components of the formula

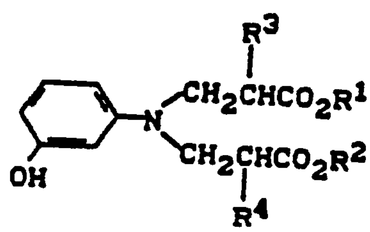

6. Process for the preparation of azo dyestuffs according to Claim 1, characterised in that the halogen atoms of azo compounds of the formula

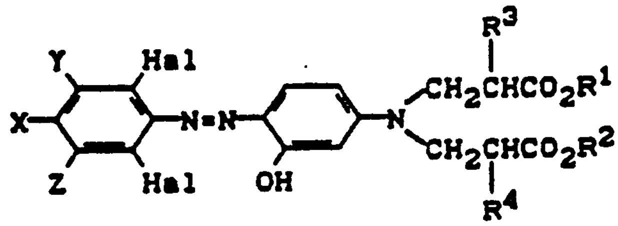

in which
Hal denotes halogen, preferably Cl or Br,
are exchanged in a manner known per se for cyano groups.

7. Process for dyeing synthetic textile material, characterised in that dyestuffs according to Claim 1 are used.

8. Process for carrying out textile or non-textile transfer printing, characterised in that dyestuffs according to Claim 1 are used.

## Revendications

1. Colorants azoïques de formule

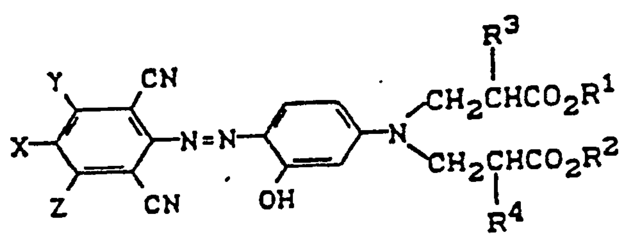

(I)

dans laquelle les divers symboles ont, indépendamment les uns des autres, les significations suivantes :

X = F, Cl, Br, I, R, $CO_2R$, COR', CN ou $CF_3$,
Y = H, $CH_3$, Cl ou Br,
Z = H, Cl ou Br,
R = alkyle en $C_1$-$C_4$ ou cycloalkyle en $C_5$-$C_6$,
R'= R ou phényle éventuellement substitué par alkyle en $C_1$ -$C_4$ ou Cl,
$R^1/R^2$ = alkyle en $C_1$ -$C_4$ éventuellement substitué par OH ou alcoxy en $C_1$-$C_4$, et
$R^3/R^4$ = H ou $CH_3$.

2. Colorants azoïques selon la revendication 1, caractérisés en ce que :
X = Cl, Br ou $CO_2R$
Y = H ou Cl,
Z = H ou Cl,
$R^1/R^2$ =$CH_3$ ou $C_2H_5$ et
$R^3/R^4$ = H.

3. Colorants azoïques selon la revendication 1 ou 2, caractérisés en ce que X = $COR_2$, Cl ou Br.

4. Colorants azoïques selon la revendication 1, de formule :

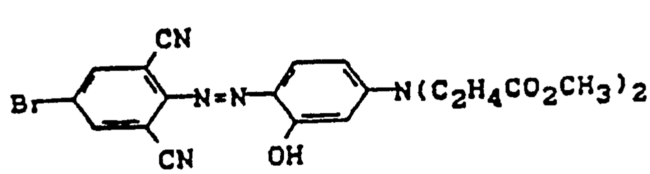

5. Procédé de préparation des colorants azoïques selon la revendication 1, caractérisé en ce que l'on diazote des anilines de formule :

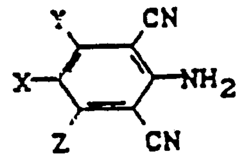

et on copule sur des copulants de formule :

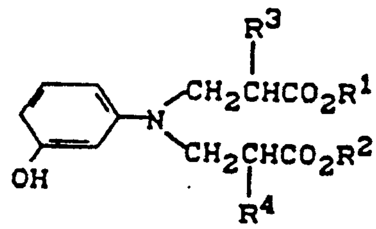

6. Procédé de préparation des colorants azoïques selon la revendication 1, caractérisé en ce que, partant de composés azoïques de formule :

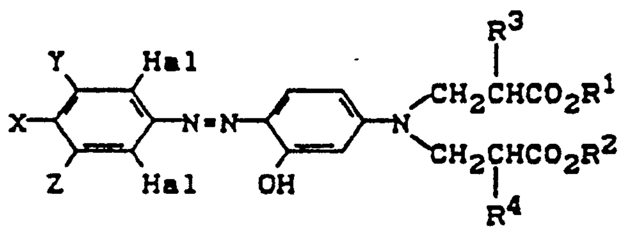

dans laquelle
Hal = halogène, de préférence Cl ou Br,
on échange les atomes d'halogènes, de manière connue en soi, contre des groupes cyano.

7. Procédé pour teindre des matières textiles synthétiques, caractérisé en ce que l'on utilise des colorants selon la revendication 1.

8. Procédé pour la mise en oeuvre de l'impression par transfert textile ou non textile, caractérisé en ce que l'on utilise des colorants selon la revendication 1.